# EUROPEAN PATENT SPECIFICATION

(11) **EP 0 423 084 B1**
(45) Date of publication and mention of the grant of the patent: **17.04.1996**
(21) Application number: 90830451.2
(22) Date of filing: 11.10.1990
(51) Int. Cl.: G01K 13/08, G01K 7/36

(54) **Method of and apparatus for automatic non-contact detection of the surface temperature of metallic rotatable bodies**
Verfahren und Vorrichtung für die automatische berührungslose Erfassung der Oberflächentemperatur von rotierbaren metallischen Körpern
Procédé et dispositif pour la détection automatique sans contact de la température superficielle des corps rotatifs

(30) Priority: 13.10.1989 IT 4845489
(43) Date of publication of application: 17.04.1991
(73) Proprietor: Ente per le nuove tecnologie, l'energia e l'ambiente ( ENEA), I-00198 Roma (IT)
(72) Inventor: Imperiali, Franco, I-00137 Roma (IT)
(74) Representative: Sarpi, Maurizio

(56) References cited:
- DE-A- 3 416 340
- DE-B- 2 711 767

## Description

The present invention relates to a method of and an apparatus for automatically and directly detecting the temperature of the surface of metallic rotatable bodies. The described apparatus can in particular be used with rotors of stem turbines, thus allowing the efficiency and the operation of the turbines to be optimized.

Devices or systems adapted to directly detect the surface temperature of the turbine rotors are not known at the present time, even if several studies and attempts have been made to use more or less complicated pyrometers. The temperature measurements are indirectly performed by measuring the temperatures of the stator and the steam and deriving the temperature of the rotor through calculations. Of course, this involves a certain approximation degree which cannot be avoided, especially during the transient operation steps.

Therefore, the main object of this invention is to allow the temperature of the surface layer of a moving metallic body to be directly measured without establishing any contact therewith and only keeping a transducer near said surface.

A further object of the invention falling within the above mentioned scope is to provide a method and an apparatus adapted to detect any unevenness produced on the surface or near the surface of the body.

The above mentioned objects are achieved by the described method and apparatus which make use of the principle of the penetration of induced currents into a metallic material as a function of the frequency.

As is known, when a metallic object is placed near a variable electromagnetic field, called primary field, it is crossed by variable currents called induced currents.

Such currents, the flow of which depends on variables related to the metallic object, produce a variable magnetic field called secondary field. The penetration of the induced currents varies as a function of the frequency and the parameters of the object like the conductivity, the permeability and the state of the surface. Also the secondary field associated to such currents varies in the same way and is controlled by monitoring its effects on the current or the voltage of the primary winding.

From the foregoing it results that a variation in the resistivity of the object (secondary) can be detected on the transducer (primary). Therefore, as the local or general variations in the resistivity of the object depend on the temperature, the temperature itself can be derived from the calculation of the resistivity.

Devices for measuring the temperature of metallic cbjects based upon the Foucault's effect are already known from DE-A-2711767 and DE-A-3416340.

According to the experimentations carried out by the Applicant it has been pointed out:
a) the possibility of introducing a functional relation between the couple of variable components of the impedance of the secondary formed by the body, i.e. the resistive component especially influenced by the temperature and the reactive component influenced by the distance (coupling inductance), and the couple of parameters such as temperature of the body and distance between transducer and body; and
b) the possibility of discriminating at the same time the signal produced by the variation of temperature in the material from the signal produced by the variation of the distance with an indeterminacy lowers than ± 10°C and at ± 0,25 mm by analyzing amplitude and phase of the signals of the primary.

According to the invention it is therefore provided to radiate electromagnetic energy by means of a solenoid, in which an alternate current is passed, towards the surface of a metallic material where induced currents are generated, said current penetrating the material by a thickness inversely proportional (the relation is not linear) to the frequency of the current passing in the solenoid, and then to measure the impedance of the material.

By varying the frequency the thickness of the material involved can be varied accordingly so that the thermal conditions in said layer can be evaluated.

In a preferred embodiment the measuring device makes use of an impedance bridge which is unbalanced by the impedance variations in the tested body.

Such variations are detected by an amplifier supplying an amplified signal to a computer which analyzes phase and amplitude of the signal and discriminates the signal generated by the variations of distance from the signal generated by the variations of the resistivity of the body through a suitable algorithm. The temperature of the body is derived from the variation of resistivity.

A higher measurement precision is achieved by calibrating the device according to the body under different thermal conditions, and by storing in the computer the curves of the signal variations due to thermal variations and distance variations so as to automatically provide the temperature for each condition.

Further features and advantages of the invention will be more readily apparent from the following detailled description with reference to the annexed drawing illustrating only by way of example a non-limitative preferred embodiment of the invention.

In the drawing:
Fig. 1 shows a basic circuit diagram;
Fig. 2 is a block diagram of the device according to a preferred embodiment of the invention.

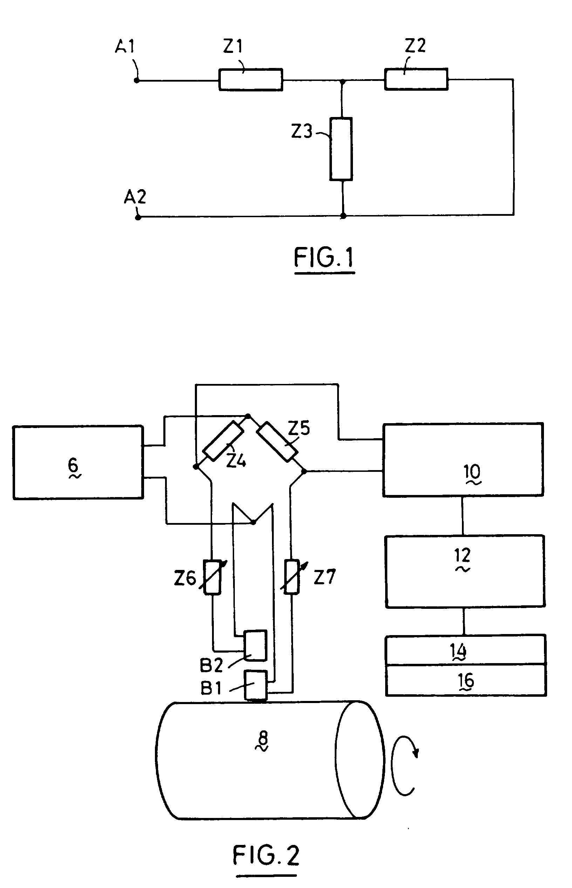

With reference to Fig. 1 the operation of the invention consists in radiating electromagnetic energy by means of a solenoid, in which an alternate current is passed, towards the surface of a metallic material where induced currents are generated, said current penetrating the material by a thickness inversely proportional to the frequency of the current passing in the solenoid, and then measuring the impedance variation of the material, thereby achieving the temperature variation in the latter.

The equivalent diagram is shown in Fig. 1 where the impedance (R1 + iX1) of the inducer or transducer solenoid is indicated at Z1, the impedance (R2 + iX2) of the circuit formed of the metallic material, in which the induced currents are generated, is indicated at Z2, and the transducer-material coupling impedance (R3 + iX3) is indicated at Z3.

The variation of impedance Z2 caused by the material resistivity variation with the temperature can be detected at the ends A1 and A2 of the circuit.

Actually the described device is operating as a transformer where the primary is formed of the inducer solenoid Z1 and the secondary is formed of the tested material Z2.

One of the problems to be overcome in praxis is the need of compensating the impedance variations of the transducer due to the resistivity variations because of the temperature.

This drawback has been overcome in a preferred embodiment by resorting to a bridge circuit according to the block diagram of Fig. 2.

With reference to said block diagram a frequency generator 6 supplies an impedance bridge with two variable impedances Z4, Z5 and two variable balancing impedances Z6, Z7, said bridge being connected to a transducer B1 near the rotating shaft 8 which has to be controlled. Transducer B1 is a solenoid placed near a compensating coil B2 having the same impedance so as to detect the room temperature variations in the same way. Actually the two solenoids have different tasks, the first B1 is a read-out solenoid, the second B2 is a compensating solenoid.

The signal received at the ends of the bridge is amplified by a signal amplifier 10 and supplied to a computer 12 where its phase and amplitude are analyzed and processed before being transmitted to a printer 14 and/or to a recorder 16.

The impedance bridge is reset when transducer B1 is brought before the material to be controlled, i.e. near the rotating shaft 8 when the latter operates under known conditions.

Preferably the inductor solenoid B1 is made of a material having a low resistivity and a known reaction to the temperature such as silver and is covered with a suitable insulating sheath of fiberglass allowing it to withstands a wide temperature range (0° to 750°C).

An alternative solution is that solenoid B1 may also be cooled with an air flow or with cooling liquids to be kept under constant temperature and used to measure even higher temperatures.

From the foregoing the advantages of the invention are evident:
the system allows the temperature of the surface layer of a moving body to be directly measured without establishing any contact therewith and only keeping the transducer near the surface;
any discontinuity of the surface or near the surface of the tested body can be detected in real or almost real time;
the reliability is very high.

The present invention has been illustrated and described with reference to a preferred embodiment, however it should be understood that construction modifications can be made without parting from the scope of the present invention.

## Claims

1. A method of automatically detecting the surface temperature of metallic rotatable bodies, wherein the temperature is directly detected without establishing any contact with the tested body (8) and by generating in said body induced currents through a transducer (B1) placed near said body and by detecting through the same transducer (B1) the impedance variations of the body (8) due to resistivity variations as a function of the temperature, characterized by the fact that the curves of the signal variations due to thermal variations and distance variations are stored in a computer as a result of the calibration of the sensor-surface of the tested body system, which computer is used for processing phase and amplitude of the detected impedance so as to discriminate the signal generated by the resistivity variations in the tested body (8) from the signal generated by any variation of the distance between the sensor and the surface of the tested body, comparing said signals with the calibration curves stored therein, thus deriving the temperature of the body.

2. An apparatus for automatically detecting the surface temperature of metallic rotatable bodies, including:
induction means generating induced currents in the metallic tested body (8);
sensing means detecting the impedance variations of said metallic tested body, characterized by providing:
a computer (12) which processes phase and amplitude of the detected impedance so as to discriminate the signal generated by the resistivity variation in the metallic tested body (8) from the signal generated by any variation of distance between the body and said detecting means, comparing said signals with calibration curves stored therein representing the signal variations due to thermal variations and distance variations between the tested body and said detecting means, thus deriving the temperature of the body (8); and
means compensating the variations of the sensing means detecting the impedance variations of the tested body.

3. The apparatus of the preceding claim, characterized by a frequency generator supplying an impedance bridge (Z4, Z5, Z6, Z7) to which a transducer (B1) near the tested body (8) is connected.

4. The apparatus of claims 2 and 3, characterized in that transducer (B1) is a solenoid placed beside a suitable shielded compensating coil (B2) connected to said impedance bridge and having the same resistive component as the transducer so as to detect the room temperature variations in the same way.

5. The apparatus of claims 2 to 4 characterized in that the unbalances at the ends of said impedance bridges due to the impedance variations of the tested body (8) are detected by a signal amplifier (10) supplying an amplified signal to a computer (12).

6. The apparatus of claims 2 to 5, characterized in that a cooling system for transducer (B1) is provided by an air flow or a cooling liquid.

7. The apparatus of claims 2 to 6, characterized in that the trasnducer is covered by an insulating sheath such as fiberglass.

## Patentansprüche

1. Verfahren zum selbsttätigen Ermitteln der Oberflächentemperatur von metallischen drehbaren Körpern, wobei die Temperatur ohne Erzeugung irgendeines Kontakts mit dem untersuchten Körper (8) direkt ermittelt wird, sowie durch Erzeugen von in den Körper induzierten Strömen durch einen Wandler (B1), der in der Nähe des Körpers angeordnet ist, und durch Ermitteln der Impedanzänderungen des Körpers (8) aufgrund von Änderungen des spezifischen Widerstands als Funktion der Temperatur durch denselben Wandler (B1),
gekennzeichnet durch die Tatsache, daß die Kurven der Signaländerungen aufgrund thermischer Änderungen und Abstandsänderungen in einem Computer als Ergebnis der Eichung der Sensoroberfläche des untersuchten Körpersystems gespeichert werden, welcher Computer zum Verarbeiten der Phase und Amplitude der ermittelten Impedanz derart verwendet wird, daß das durch die Änderungen des spezifischen Widerstands im untersuchten Körper (8) erzeugte Signal von dem Signal unterschieden wird, das durch eine beliebige Änderung des Abstands zwischen dem Sensor und der Oberfläche des untersuchten Körpers erzeugt wird, und zum Vergleichen dieser Signale mit den Eichkurven, die darin gespeichert sind, wodurch die Temperatur des Körpers abgeleitet wird.

2. Vorrichtung zum selbsttätigen Ermitteln der Oberflächentemperatur von metallischen drehbaren Körpern, umfassend:
eine Induktionseinrichtung, die in dem metallischen untersuchten Körper (8) Ströme induziert,
eine Sensoreinrichtung zum Ermitteln der Impedanzänderungen des metallischen untersuchten Körpers, gekennzeichnet durch Vorsehen:
eines Computers (12), der die Phase und Amplitude der ermittelten Impedanz derart verarbeitet, daß das durch die Änderung des spezifischen Widerstands in dem metallischen untersuchten Körper (8) erzeugte Signal von dem Signal unterschieden wird, das durch eine beliebige Änderung des Abstands zwischen dem Körper und der Ermittlungseinrichtung erzeugt wird, wobei die Signale mit darin gespeicherten Eichkurven verglichen werden, welche die Signaländerungen aufgrund der thermischen Änderungen und der Abstandsänderungen zwischen dem untersuchten Körper und der Ermittlungseinrichtung wiedergeben, wodurch die Temperatur des Körpers (8) abgeleitet wird, und
eine Einrichtung zum Kompensieren der Änderungen der Sensoreinrichtung, welche die Temperaturänderungen des untersuchten Körpers erfaßt.

3. Vorrichtung nach dem vorangehenden Anspruch,
gekennzeichnet durch
einen Frequenzgenerator, der eine Impedanzbrücke (Z4, Z5, Z6, Z7) versorgt, an welche ein (Meß)Wandler (B1) in der Nähe des untersuchten Körpers (8) angeschlossen ist.

4. Vorrichtung nach Anspruch 2 und 3,
dadurch gekennzeichnet,
daß der Wandler (B1) ein Solenoid ist, das neben einer geeignet abgeschirmten Kompensationsspule (B2) angeordnet ist, die an die Impedanzbrücke angeschlossen ist und dieselbe Widerstandskomponente wie der Wandler derart hat, daß die Raumtemperaturänderungen in derselben Weise ermittelt werden.

5. Vorrichtung nach den Ansprüchen 2 bis 4,
dadurch gekennzeichnet,
daß die Ungleichgewichte an den Enden der Impedanzbrücken aufgrund der Impedanzänderungen des untersuchten Körpers (8) durch einen Signalverstärker (10) ermittelt werden, der ein verstärktes Signal an einen Computer (12) liefert.

6. Vorrichtung nach den Ansprüchen 2 bis 5,
dadurch gekennzeichnet,
daß ein Kühlsystem für den Wandler (B1) durch einen Luftstrom oder eine Kühlflüssigkeit vorgesehen ist.

7. Vorrichtung nach den Ansprüchen 2 bis 6,
dadurch gekennzeichnet,
daß der Wandler durch einen Isoliermantel, wie beispielsweise Fiberglas abgedeckt ist.

## Revendications

1. Un procédé pour la détection automatique de la température superficielle de corps métalliques rotatifs, dans lequel la température est détectée directement sans établir un contact quelconque avec le *corps* sous essai (8) et en produisant dans ledit corps des courants induits par l'intermédiaire d'un transducteur (B1) placé prés dudit corps et en détectant à travers ce même transducteur (B1) les variations d'impédance du corps (8) dues a des variations de résistivité en fonction de la température, caractérisé par le fait que les courbes des variations de signaux dues aux variations thermiques et aux variations de distance sont stockées dans un ordinateur à la suite de l'étalonnage de la surface du capteur du système de corps sous essai, ordinateur qui est utilisé pour traiter la phase et l'amplitude de l'impédance détectée de manière à discriminer le signal produit par les variations de résistivité dans le corps sous essai (8) à partir du signal produit par toute variation de distance entre le capteur et la surface du corps sous essai, en comparant lesdits signaux avec les courbes d'étalonnage qui y sont stockées, en déduisant ainsi la température du corps.

2. Un appareil pour détecter de manière automatique la température superficielle de corps métalliques rotatifs, comprenant :
des moyens à induction produisant des courants induits dans le corps métallique sous essai (8) ;
des moyens formant capteurs détectant les variations d'impédance dudit corps métallique sous essai, caractérisé par le fait de prévoir :
un ordinateur (12) qui traite la phase et l'amplitude de l'impédance détectée de manière à discriminer le signal produit par la variation de résistivité dans le corps métallique sous essai (8) du signal produit par une variation quelconque de distance entre le corps et lesdits moyens de détection, en comparant lesdits signaux avec des courbes d'étalonnnage qui y sont stockées en représentant les variations des signaux dues à des variations thermiques et à des variations de distance entre le corps sous essai et lesdits moyens de détection, en déduisant ainsi la température du corps (8) ; et
des moyens compensant les variations des moyens formant capteurs détectant les variations d'impédance du corps sous essai.

3. L'appareil de la revendication précédente, caractérisé par un générateur de fréquences alimentant un pont d'impédances (Z4, Z5, Z6, Z7) auquel est relié un transducteur (B1) près du corps sous essai (8).

4. L'appareil des revendications 2 et 3, caractérisé en ce que le transducteur (B1) est un solénoïde placé à côté d'une bobine de compensation blindée appropriée (B2) reliée audit pont d'impédances et présentant le même élément résistif que le transducteur de manière à détecter les variations de température ambiante de la même façon.

5. L'appareil des revendications 2 à 4, caractérisé en ce que les déséquilibres aux extrémités desdits ponts d'impédance dus aux variations d'impédance du corps sous essai (8) sont détectés par un amplificateur de signaux (10) fournissant un signal amplifié à un ordinateur (12).

6. L'appareil des revendications 2 à 5, caractérisé en ce qu'un système de refroidissement pour le transducteur (B1) est assuré par un écoulement d'air ou un liquide de refroidissement.

7. L'appareil des revendications 2 à 6, caractérisé en ce que le transducteur est recouvert d'une gaine isolante par exemple en fibres de verre.
